# EUROPÄISCHE PATENTANMELDUNG

(11) **EP 1 990 881 A2**
(43) Veröffentlichungstag der Anmeldung: **12.11.2008**
(21) Anmeldenummer: 08008664.8
(22) Anmeldetag: 08.05.2008
(51) Int. Cl.: H02G 3/14, H02G 3/12

(54) **Abdeckung für Unterputz-Einbauteil in der Elektroinstallation und Verwendung der Abdeckung**

(30) Priorität: 09.05.2007 DE 202007006833 U
(71) Anmelder: Hilgert, Martin, 66450 Bexbach (DE)
(72) Erfinder: Hilgert, Martin, 66450 Bexbach (DE)
(74) Vertreter: Wieske, Thilo

(57) **Zusammenfassung**

Die Erfindung betrifft eine Abdeckung für Unterputz-Einbauteile in der Elektroinstallation, wobei die Abdeckung aufbringbar ist auf den Unterputz-Einbauteilen zu deren Schutz bei Renovierungsarbeiten, wobei die Abdeckung als Formteil ausgebildet und derart dimensioniert ist, dass diese die Unterputz-Einbauteile in deren eingebautem Zustand überdeckt, wobei die Abdeckung Befestigungsmittel aufweist zur Befestigung der Abdeckung an den Unterputz-Einbauteilen. Ebenso betrifft die Erfindung die Verwendung einer derartigen Abdeckung.

## Beschreibung

Die Erfindung betrifft eine Abdeckung für Unterputz-Einbauteile in der Elektroinstallation nach dem Oberbegriff des Anspruchs 1 sowie die Verwendung einer Abdeckung nach Anspruch 6.

Derartige Abdeckungen werden aktuell realisiert, indem die Unterputz-Einbauteile nach deren Einbau vor dem Durchführen insbesondere von Malerarbeiten mit Klebeband überklebt werden. Die Unterputz-Einbauteile können beispielsweise Unterputz-Steckdosen (für Energieversorgung oder auch für die Nachrichtentechnik wie beispielsweise die Telekommunikation), Unterputz-Schalter sein oder im Zusammenhang mit moderneren Installationssystemen wie beispielsweise dem EIB auch Bauteile mit komplexeren Schalt- bzw. Regelaufgaben. Die Abdeckung erweist sich als wesentlich, weil die Verschmutzung derartiger Bauteile mit Farbe zumindest unschön aussieht und vielfach auch zu einer Fehlfunktion der Bauteile führen kann. Werden bei einer Steckdose zur Energieversorgung beispielsweise die Erdungskontakte mit Farbe überstrichen, erhöht sich der Widerstand gegen Erde, so dass die Dimensionierung der Elektroinstallation eventuell nicht mehr stimmt Bei Steckdosen für die Nachrichtentechnik kann es ebenfalls zu Fehlfunktionen bei der Kontaktierung kommen. Derart überstrichene Bauteile müssen daher durchweg ersetzt werden, was zu nicht unerheblichen Kosten zur Mängelbeseitigung rühren kann.

Der vorliegenden Erfindung liegt die Aufgabe zu Grunde, die Durchführung der Abdeckung derartiger Unterputz-Einbauteile zu verbessern.

Diese Aufgabe wird nach der vorliegenden Erfindung gelöst, indem eine Abdeckung auf den Unterputz-Einbauteilen zu deren Schutz bei Renovierungsarbeiten aufbringbar ist, wobei die Abdeckung derart dimensioniert ist, dass diese die Unterputz-Einbauteile in deren eingebautem Zustand überdeckt, wobei die Abdeckung Befestigungsmittel aufweist zur Befestigung der Abdeckung an den Unterputz-Einbauteilen.

Die Unterputz-Einbauteile sind derart dimensioniert, dass diese Grundplatten aufweisen, die auf der Mauer anliegen. Hinter dieser Grundplatte befindet sich ein Teil des Unterputz-Einbauteils, dass nach der Montage unter Putz liegt Aus der Grundplatte steht üblicherweise noch ein Teil des Unterputz-Einbauteils vor. Die Grundplatte ist so dimensioniert, dass bei nebeneinander angeordneten Unterputz-Einbaudosen im Normabstand von 70 mm die Grundplatten nebeneinander montierter Unterputz-Einbauteile gerade aneinander anstoßen. Diese Grundplatten sind üblicherweise aus Metall gebildet.

Vorteilhaft wird also nach der vorliegenden Erfindung zum einen genutzt, dass die zu schützenden Unterputz-Einbauteile eine Normgröße haben, wobei unabhängig davon, um welches Unterputz-Einbauteil es sich handelt, eine - üblicherweise - metallische Grundplatte vorhanden ist. Erfindungsgemäß wird eine Abdeckung vorgeschlagen, die mittels Befestigungsmitteln an der Grundplatte befestigbar ist, wobei die Abdeckung das Unterputz-Einbauteil abdeckt.

Die Befestigungsmittel können beispielsweise Magnete sein. Dabei wird vorteilhaft genutzt, dass die Grundplatte üblicherweise aus Metall besteht. Bei der Ausgestaltung der Befestigungsmittel als Magnete erweist sich als vorteilhaft, dass die Abdeckung unabhängig von dem Hersteller der Unterputz-Einbauteile verwendet werden kann.

Es ist auch möglich, die Befestigungsmittel beispielsweise als Steckpins auszubilden, die in entsprechende Löcher der Grundplatte des Unterputz-Einbauteils eingreifen.

Beispielsweise sind entlang der vier Kanten der Grundplatten üblicherweise rund geformte Langlöcher ausgebildet, die an einem Ende kreisförmig vergrößert sind. Durch diese kreisförmige Vergrößerung ist der Kopf einer Schraube führbar, die insbesondere bei Hohlwanddosen zur Befestigung der Unterputz-Einbauteile in der Hohlwanddose verwendet wird, nachdem die Schraube durch das entsprechende Loch geführt wurde, wird das Unterputz-Einbauteil in die Montagelage gedreht, wobei die Schraube entlang des Langlochs von der kreisförmigen Vergrößerung weggeführt wird. Es kann zur Befestigung der Abdeckung beispielsweise ein Steckpin vorgesehen sein, der in das kreisförmige Loch eingreift. Außerdem werden die Unterputz-Einbauteile üblicherweise lediglich mit zweien dieser Schrauben befestigt, so dass zwei diese Langlöcher mit der kreisförmigen Vergrößerung an einem Ende auch bei montiertem Unterputz-Einbauteil frei bleiben. Es ist daher möglich, die Abdeckung mittels Steckpins an diesen freien Langlöche zu befestigen, indem die Abdeckung zwei sich gegenüber liegenden Steckpins aufweist, die mit den Langlöchern korrespondieren.

Es ist auch möglich, Abdeckungen mit Befestigungsmitteln vorzusehen, die speziell auf die Grundplatten bestimmter Unterputz-Einbauteile abgestimmt sind. Beispielsweise kann die Grundplatte an bestimmten, vom Hersteller des Unterputz-Einbauteils definierten Stellen Löcher aufweisen. Die Abdeckung kann an den entsprechenden Stellen Steckpins aufweisen, so dass die Abdeckung bei diesen Unterputz-Einbauteilen definiert befestigbar ist. Anstelle der Löcher kann beispielsweise auch der Randbereich der Grundplatte entsprechend geformt sein, beispielsweise durch kreisförmige Einschnitte an den Ecken, so dass dort entsprechende Steckpins befestigbar sind.

Es ist aber nicht zwingend erforderlich, die Abdeckungen an der Grundplatte des Unterputz-Einbauteils zu befestigen. Beispielsweise können zwei Steckpins aus Kunststoff vorgesehen sein, die in die Kontakte einer Steckdose einsteckbar sind. Dadurch lässt sich ebenfalls eine Abdeckung für eine Steckdose als Unterputz-Einbauteil befestigen. Diese Befestigungsmöglichkeit ist wiederum unabhängig vom Hersteller des Unterputz-Einbauteils. Ebenso ist es möglich, Abdeckungen mit entsprechend den jeweiligen Normen ausgestalteten Steckpins vorzusehen für standardisierten Telekommunikationsdosen wie beispielsweise Steckpins zum Einstecken in die Fernseh-/Radiobuchsen bei den Femseh-Radiodosen, Steckpins zur Einstecken in die TAE-Dosen für analoge Telefonanschlüsse, Steckpins zum Einstecken in ISDN-Dosen oder in Netzwerkdosen, die den entsprechenden Steckern für diese Dosen entsprechen. Abhängig vom Hersteller lassen sich wiederum angepasste Befestigungsmittel für Schalter oder andere Unterputz-Einbauteile herstellen.

Außer der Ausführung zur Abdeckung lediglich eines einzelnen Unterputz-Einbauteiles kann die Abdeckung auch so dimensioniert sein, dass diese mehrere nebeneinander angeordnete Unterputz-Einbauteile abdeckt (beispielsweise zwei, drei, vier, fünf oder ggf. auch noch mehr).

Im Vergleich zur bisherigen Vorgehensweise des Abklebens der Unterputz-Einbauteile mittels Klebeband ergibt sich damit vorteilhaft, dass die Abdeckungen einfach und schnell auf die montierten Unterputz-Einbauteile aufgesetzt werden können. Ebenso können diese Abdeckungen einfach und schnell wieder entfernt werden und stehen für weitere Nutzungen zur Verfügung. Im Vergleich zur bisherigen Vorgehensweise erweist sich insbesondere die Zeitersparnis als vorteilhaft, die daraus resultiert, dass nicht jedes Unterputz-Einbauteil separat abgeklebt werden muss.

Außer dem Zeitvorteil erweist es sich als vorteilhaft, dass die Abdeckungen wiederverwendbar sind. Diese können beispielsweise aus Kunststoff hergestellt sein, wobei die entsprechenden Befestigungsmittel angespritzt oder eingespritzt sein können. Ebenso können beispielsweise Magnete als Befestigungsmittel eingesteckt oder in sonstiger Weise befestigt sein. Dadurch sind diese Abdeckungen auch in mechanischer Hinsicht stabiler als die bisher verwendeten Klebebänder. Insbesondere kann vermieden werden, dass sich beispielsweise bei Steckdosen die Erdungskontakte durch die Abdeckung durchdrücken, wie dies bei der Verwendung von Klebebändern schnell passieren kann.

Wie im Zusammenhang mit den nachfolgenden Ansprüchen beschrieben, kann ein System von Abdeckungen vorgeschlagen werden, mit dem die Unterputz-Einbauteile einschließlich der Grundplatten vollständig abdeckbar sind. Es ist aber auch möglich, die Abdeckungen so zu dimensionieren, dass die jeweils einzeln auf ein Unterputz-Einbauteil montierbar sind derart, dass bei mehreren nebeneinander montierten Unterputz-Einbauteilen mehrere diese Abdeckungen nebeneinander montierbar sind. Die Abdeckungen entsprechen dann hinsichtlich der Außenmaße den genormten Abständen der Unterputz-Einbauteile, ohne seitlich über diese überzustehen.

Bei der Ausgestaltung nach Anspruch 2 ist die Abdeckung derart dimensioniert, dass diese vier Seitenwände aufweist, die durch eine Bodenplatte miteinander verbunden sind, wobei die im eingebauten Zustand der Unterputz-Einbauteile aus der Wand vorstehenden Teile in dem Hohlraum der Abdeckung aufnehmbar sind, wobei die Abdeckung derart dimensioniert ist, dass zumindest zwei sich gegenüber liegende Seitenwände die Grundplatte des Unterputz-Einbauteils umgreifen.

Bei der Ausgestaltung nach Anspruch 3 ist die Abdeckung derart dimensioniert, dass diese vier Seitenwände aufweist, die durch eine Bodenplatte miteinander verbunden sind, wobei die im eingebauten Zustand der Unterputz-Einbauteile aus der Wand vorstehenden Teile in dem Hohlraum der Abdeckung aufnehmbar sind, wobei die Abdeckung derart dimensioniert ist, dass drei Seitenwände die Grundplatte des Unterputz-Einbauteils umgreifen.

Vorteilhaft lässt sich mit den Abdeckungen nach den Ansprüchen 2 und 3 eine Kombination derartiger Abdeckungen realisieren, mit der auch mehrere nebeneinander eingebauter Unterputz-Einbauteile abgedeckt werden können. Vorteilhaft ergibt sich durch das Umgreifen der Grundplatten der Unterputz-Einbauteile, dass die Abdeckungen gegen ein Verschieben gesichert sind. Abhängig von der Stärke der Magnete könnte es andernfalls passieren, dass die Abdeckungen bei einer Berührung mit einer Farbrolle seitlich verschoben werden, so dass die Unterputz-Einbauteile dann doch teilweise frei liegen und mit Farbe verschmutzt werden können. Durch das Umgreifen der Grundplatten kann dies vorteilhaft vermieden werden.

Für die beiden Unterputz-Einbauteile, die sich am Rand einer derartigen Reihe befinden, werden dabei Abdeckungen vorgesehen, die mit drei Seitenwänden die Grundplatten umgreifen. Für die dazwischen angeordneten Unterputz-Einbauteile werden Abdeckungen vorgesehen, die mit lediglich zwei Seitenwänden die Grundplatte eines Unterputz-Einbauteils umgreifen.

In einer weiteren vorteilhaft Ausgestaltung sind die Abdeckungen noch so ausgeführt, dass diese untereinander mechanisch verbunden werden können, beispielsweise mittels Clip-Verbindungen oder Steckkontakten. Dadurch ist auch verbessert gewährleistet, dass der Verbund von Abdeckungen besser zusammenhält

Dort, wo die Seitenwände der Abdeckungen die Grundplatten nicht umgreifen sind die Abdeckungen derart dimensioniert, dass die Seitenwände nicht seitlich über die Grundplatten überstehen.

Bei der Ausgestaltung nach Anspruch 4 ist die Abdeckung derart dimensioniert, dass diese vier Seitenwände aufweist, die durch eine Bodenplatte miteinander verbunden sind, wobei die im eingebauten Zustand der Unterputz-Einbauteile aus der Wand vorstehenden Teile in dem Hohlraum der Abdeckung aufnehmbar sind, wobei die Abdeckung derart dimensioniert ist, dass alle Seitenwände die Grundplatte des Unterputz-Einbauteils umgreifen.

Mit einer derartigen Abdeckung lassen sich einzeln angebrachte Unterputz-Bauteile abdecken mit dem bereits beschriebenen Vorteil, dass die Abdeckung gegen sein seitliches Verschieben gesichert ist

Bei der Ausgestaltung nach Anspruch 5 ist die Abdeckung derart dimensioniert, dass diese vier Seitenwände aufweist, die durch eine Bodenplatte miteinander verbunden sind, wobei die im eingebauten Zustand der Unterputz-Einbauteile aus der Wand vorstehenden Teile in dem Hohlraum der Abdeckung aufnehmbar sind, wobei die Abdeckung derart dimensioniert ist, dass diese mehrere nebeneinander angeordnete Unterputz-Einbauteile abdeckt, wobei alle Seitenwände die Grundplatten der Unterputz-Einbauteile umgreifen.

Hierbei handelt es sich um eine Abdeckung, die mit einem Arbeitsvorgang beispielsweise Kombinationen von beispielsweise zwei, drei, vier oder fünf nebeneinander angebrachten Unterputz-Bauteilen abdeckt Vorteilhaft entfällt dabei das einzelne Anbringen der Abdeckungen über jedes Unterputz-Bauteil einzeln sowie das Ausrichten der Abdeckungen aufeinander.

Sofern die Abdeckungen die Grundplatte der Unterputz-Einbauteile umgreifen, sind diese sinnvoller Weise so dimensioniert, dass deren Außenabmessungen kleiner sind als die Abdeckrahmen, die abschließend auf die Unterputz-Einbauteile montiert werden, wenn die Renovierungsarbeiten abgeschlossen sind. Dadurch sind keine Grenzlinien sichtbar zwischen Bereichen, die beim renovieren gestrichen wurden und den Bereichen, an die keine Farbe gelangt ist.

Anspruch 6 betrifft die Verwendung einer der vorstehenden beschriebenen Abdeckungen zum Schutz von wenigstens einem Unterputz-Einbauteil bei Tapezier- und/oder Malerarbeiten an einer Wand, in der dieses Unterputz-Einbauteil montiert ist.

Die Vorteile hinsichtlich der Arbeitserleichterung bei den vorbereitenden Arbeiten zu den Renovierungsarbeiten wurden im Zusammenhang mit den anderen Ansprüchen bereits erläutert.

Durch die Ausgestaltung der Abdeckung als Formteil ergibt sich eine einfache Handhabung. Dies gilt insbesondere auch im Vergleich zu den bekannten Abklebearbeiten mittels Klebebändern.

Ein Ausführungsbeispiel der Erfindung ist in der Zeichnung dargestellt Es zeigt dabei:
- Figur 1:: eine erste Ausführungsform einer Abdeckung mit vier Seitenwänden,
- Figur 2:: eine zweite Ausführungsform einer Abdeckung mit vier Seitenwänden und
- Figur 3:: eine dritte Ausführungsform einer Abdeckung mit vier Seitenwänden.

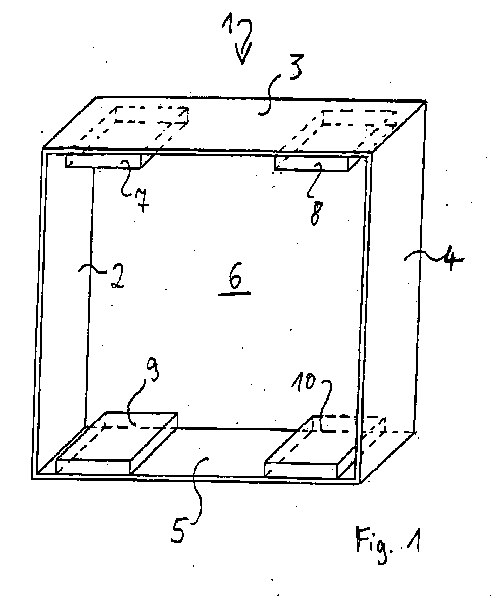

Figur 1 zeigt eine erste Ausführungsform einer Abdeckung 1 mit vier Seitenwänden 2, 3, 4, 5 und einer Bodenplatte 6. Es sind weiterhin vier Magnete 7, 8, 9, 10 zu sehen, mittels denen die Abdeckung 1 auf der metallischen Grundplatte eines Unterputz-Einbauteils der Elektroinstallation befestigbar ist Wie zu sehen sind die Magnete 7, 8, 9, 10 vorteilhaft im Bereich der Ecken der Abdeckung 1 sowie der Grundplatte des Unterputz-Einbauteils angebracht. Es hat sich gezeigt, dass unabhängig von dem Hersteller des Unterputz-Einbauteils dort ganz überwiegend glatte metallische Flächen vorliegen, so dass mittels der Magnete dort die Abdeckungen befestigbar sind. Es ist weiterhin zu sehen, dass die Tiefe der Abdeckung 1 so dimensioniert ist, dass mit der Abdeckung auch vorstehende elektronische Bauteile abgedeckt werden können, die beispielsweise Bestandteil einer EIB-Installation sind.

Hinsichtlich weiterer Befestigungsmöglichkeiten der Abdeckung wird nochmals auf die Ausführungen im Zusammenhang mit Anspruch 1 verwiesen. Dies gilt ebenso für die Ausführungsbeispiel der nachfolgenden Figuren.

Die Abdeckung nach Figur 1 ist so ausgeführt, dass die Außenkanten der Seitenwände 2, 3, 4, 5 mit der Grundplatte abschließen. Es ist allerdings auch möglich, die Abdeckung so zu dimensionieren, dass die Seitenwände 2, 3, 4, 5 die Grundplatte umgreifen. Vorteilhaft sind die Magnete 7, 8, 9, 10 dann gegenüber der vorderen Kante der Seitenwände 2, 3, 4, 5 zurückgesetzt. Dadurch wird die Abdeckung gegen ein Verschieben gesichert, weil die Seitenwände durch das Umgreifen der Grundplatte des Unterputz-Einbauteils seitlichen Halt geben. Ein solche Ausführungsform eignet sich insbesondere für einzeln montierte Unterputz-Einbauteile.

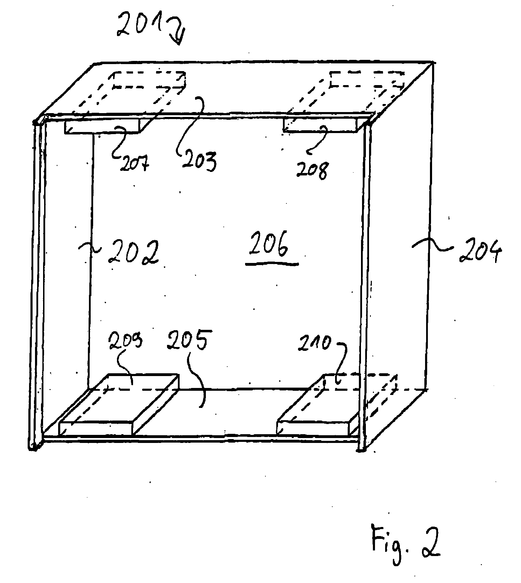

Figur 2 zeigt eine weitere Ausführungsform einer Abdeckung 201 mit vier Seitenwänden 202, 203, 204, 205 und einer Bodenplatte 206. Es sind weiterhin vier Magnete 207, 208, 209, 210 zu sehen, mittels denen die Abdeckung 201 auf der metallischen Grundplatte eines Unterputz-Einbauteils der Elektroinstallation befestigbar ist. Wie zu sehen sind die Magnete 207, 208, 209, 210 vorteilhaft im Bereich der Ecken der Abdeckung 201 sowie der Grundplatte des Unteiputz-Einbauteils angebracht Es hat sich gezeigt, dass unabhängig von dem Hersteller des Unterputz-Einbauteils dort ganz überwiegend glatte metallische Flächen vorliegen, so dass mittels der Magnete 207, 208, 209, 210 dort die Abdeckungen 201 befestigbar sind. Es ist weiterhin zu sehen, dass die Tiefe der Abdeckung 201 so dimensioniert ist, dass mit der Abdeckung 201 auch vorstehende elektronische Bauteile abgedeckt werden können, die beispielsweise Bestandteil einer EIB-Installation sind. Es ist weiterhin zu sehen, dass zwei sich gegenüber liegende Seitenwände 202, 204 derart ausgestaltet sind, dass die Magnete 207, 208, 209 und 210 gegenüber den Seitenwänden 202, 204 zurückgesetzt sind. Außerdem sind die Unterkanten der Seitenwände 203, 205 gegenüber den Unterkanten der Seitenwände 202 und 204 zurückgesetzt derart, dass die Unterkanten der Seitenwände 203 und 205 mit den Magneten 207, 208, 209, 210 abschließen. Die Bodenplatte ist so ausgestaltet, dass sie nicht quadratisch sondern rechteckig ist derart, dass die Seitenwände 202 und 204 außerhalb des Grundplatte des Unterputz-Einbauteils im montierten Zustand diese Grundplatte umgreifen. Die Seitenwände 203 und 205 stehen im montierten Zustand im Bereich der Außenkante der Grundplatte auf der Grundplatte auf

Die Abdeckung nach Figur 2 eignet sich zur Abdeckung von Unterputz-Einbauteilen, die bei einer Montage von drei oder mehr Einbauteilen nebeneinander für die mittleren Einbauteile verwendet werden können.

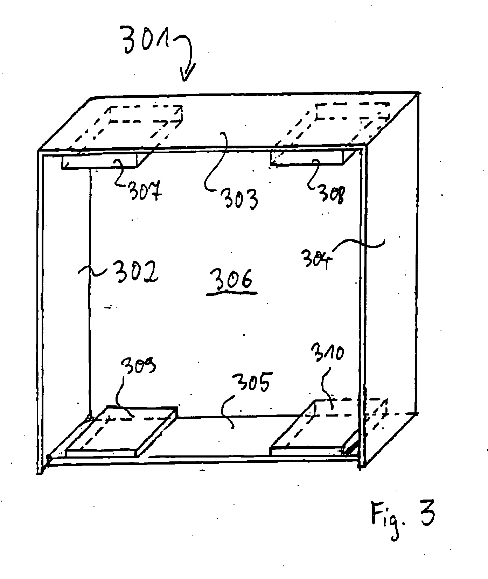

Figur 3 zeigt eine weitere Ausführungsform einer Abdeckung 301 mit vier Seitenwänden 302, 303, 304, 305 und einer Bodenplatte 306. Es sind weiterhin vier Magnete 307, 308, 309, 310 zu sehen, mittels denen die Abdeckung 301 auf der metallischen Grundplatte eines Unterputz-Einbauteils der Elektroinstallation befestigbar ist. Wie zu sehen sind die Magnete 307, 308, 309, 310 vorteilhaft im Bereich der Ecken der Abdeckung 301 sowie der Grundplatte des Unterputz-Einbauteils angebracht Es hat sich gezeigt, dass unabhängig von dem Hersteller des Unterputz-Einbauteils dort ganz überwiegend glatte metallische Flächen vorliegen, so dass mittels der Magnete 307, 308, 309, 310 dort die Abdeckungen 301 befestigbar sind. Es ist weiterhin zu sehen, dass die Tiefe der Abdeckung 301 so dimensioniert ist, dass mit der Abdeckung 301 auch vorstehende elektronische Bauteile abgedeckt werden können, die beispielsweise Bestandteil einer EIB-Installation sind. Es ist weiterhin zu sehen, dass drei Seitenwände 302, 303, 304 derart ausgestaltet sind, dass die Magnete 307, 308, 309 und 310 gegenüber den Seitenwänden 302, 303, 304 zurückgesetzt sind. Außerdem ist die Unterkante der Seitenwand 305 gegenüber den Unterkanten der Seitenwände 302, 303 und 304 zurückgesetzt derart, dass die Unterkante der Seitenwand 305 mit den Magneten 307, 308, 309, 310 abschließt. Die Bodenplatte ist so ausgestaltet, dass sie nicht quadratisch sondern rechteckig ist derart, dass die Seitenwände 302, 303 und 304 außerhalb der Grundplatte des Unterputz-Einbauteils im montierten Zustand diese Grundplatte umgreifen. Die Seitenwand 305 steht im montierten Zustand im Bereich der Außenkante der Grundplatte auf der Grundplatte auf.

Die Abdeckung nach Figur 3 eignet sich zur Abdeckung von Unterputz-Einbauteilen, die bei einer Montage von drei oder mehr Einbauteilen nebeneinander für die Einbauteile am Ende dieser Reihe verwendet werden können.

Es ist auch möglich, eine Abdeckung vorzusehen derart, dass diese so dimensioniert ist, dass diese einstückig mehrere Unterputz-Einbauteile abdeckt und dabei mit den Seitenwänden die Außenkanten der Grundplatten umgreift. Derartige Abdeckungen können vorkonfektioniert für beispielsweise zwei, drei, vier, fünf oder ggf. auch für mehr Unterputz-Einbauteile im Einbau unmittelbar nebeneinander vorgesehen werden.

## Patentansprüche

1. Abdeckung für Unterputz-Einbauteile in der Elektroinstallation, wobei die Abdeckung aufbringbar ist auf den Unterputz-Einbauteilen zu deren Schutz bei Renovierungsarbeiten,
**dadurch gekennzeichnet, dass** die Abdeckung (1, 201, 301) als Formteil ausgebildet ist und derart dimensioniert ist, dass diese die Unterputz-Einbauteile in deren eingebautem Zustand überdeckt, wobei die Abdeckung (1, 201, 301) Befestigungsmittel (7, 8, 9, 10; 207, 208, 209, 210; 307, 308, 309, 310) aufweist zur Befestigung der Abdeckung (1, 201, 301) an den Unterputz-Einbauteilen.

2. Abdeckung nach Anspruch 1,
**dadurch gekennzeichnet, dass** die Abdeckung (1, 201) derart dimensioniert ist, dass diese vier Seitenwände (2, 3, 4, 5; 202, 203, 204, 205) aufweist, die durch eine Bodenplatte (6, 206) miteinander verbunden sind, wobei die im eingebauten Zustand der Unterputz-Einbauteile aus der Wand vorstehenden Teile in dem Hohlraum der Abdeckung (1, 201) aufnehmbar sind, wobei die Abdeckung derart dimensioniert ist, dass zumindest zwei sich gegenüber liegende Seitenwände (2, 3, 4, 5; 202, 204) die Grundplatte des Unterputz-Einbauteils umgreifen.

3. Abdeckung nach Anspruch 1,
**dadurch gekennzeichnet, dass** die Abdeckung (301) derart dimensioniert ist, dass diese vier Seitenwände (302, 303, 304, 305) aufweist, die durch eine Bodenplatte (306) miteinander verbunden sind, wobei die im eingebauten Zustand der Unterputz-Einbauteile aus der Wand vorstehenden Teile in dem Hohlraum der Abdeckung (301) aufnehmbar sind, wobei die Abdeckung (301) derart dimensioniert ist, dass drei Seitenwände (302, 303, 304) die Grundplatte des Unterputz-Einbauteils umgreifen.

4. Abdeckung nach Anspruch 1,
**dadurch gekennzeichnet, dass** die Abdeckung (1) derart dimensioniert ist, dass diese vier Seitenwände (2, 3, 4, 5) aufweist, die durch eine Bodenplatte (6) miteinander verbunden sind, wobei die im eingebauten Zustand der Unterputz-Einbauteile aus der Wand vorstehenden Teile in dem Hohlraum der Abdeckung (1) aufnehmbar sind, wobei die Abdeckung (1) derart dimensioniert ist, dass alle Seitenwände (2, 3, 4, 5) die Grundplatte des Unterputz-Einbauteils umgreifen.

5. Abdeckung nach Anspruch 1,
**dadurch gekennzeichnet, dass** die Abdeckung derart dimensioniert ist, dass diese vier Seitenwände aufweist, die durch eine Bodenplatte miteinander verbunden sind, wobei die im eingebauten Zustand der Unterputz-Einbauteile aus der Wand vorstehenden Teile in dem Hohlraum der Abdeckung aufnehmbar sind, wobei die Abdeckung derart dimensioniert ist, dass diese mehrere nebeneinander angeordnete Unterputz-Einbauteile abdeckt, wobei alle Seitenwände die Grundplatten der Unterputz-Einbauteile umgreifen.

6. Verwendung einer Abdeckung nach einem der Ansprüche 1 bis 5 zum Schutz von wenigstens einem Unterputz-Einbauteil bei Tapezier- und/oder Malerarbeiten an einer Wand, in der dieses Unterputz-Einbauteil montiert ist.
